# EUROPEAN PATENT APPLICATION

(11) **EP 2 561 768 A1**
(43) Date of publication of application: **27.02.2013**
(21) Application number: 11771973.2
(22) Date of filing: 18.04.2011
(51) Int. Cl.: A23L 2/00, A23L 2/52

(54) **BOTTLED CARBONATED BEVERAGE CONTAINING SOYBEAN POWDER OR SOY MILK**

(30) Priority: 19.04.2010 JP 2010096368
(71) Applicant: Otsuka Pharmaceutical Co., Ltd., Tokyo 101-8535 (JP)
(72) Inventor: KITSUTAKA, Hiroshi, Osaka-shi Osaka 541-0045 (JP); ODAGIRI, Hisa, Osaka-shi Osaka 541-0045 (JP); AKAISHI, Morihisa, Osaka-shi Osaka 541-0045 (JP)
(74) Representative: HOFFMANN EITLE
(86) International application number: PCT/JP2011/059531
(87) International publication number: WO 2011/132638

(57) **Abstract**

[Object]

An object of the present invention is to provide a technique that allows commercialization of a carbonated beverage containing soybean powder and/or soymilk stored in a bottle in a condition that provides preservation stability for a long period of time.

[Method for Achieving the Object]

By storing a carbonated beverage containing soybean powder and/or soymilk in a bottle having a light transmittance of 10% or less for a wavelength of 250 to 650 nm, deterioration of the flavor of the carbonated beverage containing soybean powder and/or soymilk can be suppressed and long-term preservation stability can be maintained.

## Description

### Technical Field

The present invention relates to a bottled carbonated beverage containing soybean powder and/or soymilk. More specifically, the present invention relates to a bottled carbonated beverage containing soybean powder and/or soymilk that is stored in a bottle in a condition that provides excellent long-term preservation stability.

### Background Art

Soybeans are called the meat of the field. They are rich in protein, having an amino acid composition similar to that of animal protein, and contain good quality protein comparable to that of meat and eggs. Soybeans are also rich in oil (fat), and 50% or more thereof is linoleic acid, which functions to decrease blood cholesterol. Soybeans are known to be effective in preventing lifestyle-related diseases, in particular, high blood pressure. Soybeans also contain lecithin, and are known to be effective in preventing dementia by acting on brain cells. Further, soybeans also contain nutrients such as vitamins, including vitamin B1, vitamin B2, vitamin E, vitamin K, etc.; calcium; potassium; fiber; etc. These nutrients are known to be effective in relieving fatigue and preventing aging, constipation, etc. It has been reported that soybeans also contain various isoflavones that have a mild female hormone-like action, and are effective in preventing or ameliorating menopausal symptoms, osteoporosis, etc.

As described above, soybeans contain various useful nutrients, and draw widespread attention as a non-meat food material having high nutritional value and a good nutritional balance. In response to the recent health consciousness of consumers, various food products and beverages that use soybeans have been developed.

At the same time, soybean-derived ingredients (particularly, soybean protein) tend to aggregate. Therefore, when preparing a beverage containing soybean powder or soymilk, it is imperative to provide stability so as to prevent coagulation of the beverage. In particular, when soybean powder or soymilk is contained in a carbonated beverage, the soybean-derived ingredient aggregates very easily, and the stability is very likely to be impaired.

There is a conventionally reported method of preparing a soymilk-containing carbonated beverage with improved stability. The method comprises including 3% or less soybean solids content, adjusting the pH to within a range of 2.5 to 4.0, and injecting a 2.5 gas volume of carbon dioxide into the beverage (see Patent Literature 1). The soybean-derived ingredient used in Patent Literature 1 is a natural component; therefore, maintaining stability is highly required. However, Patent Literature 1 nowhere discloses how preservation stability can be maintained so that the carbonated beverage can be stably preserved for a long period of time without deterioration of the taste.

As described above, no technique for preserving a carbonated beverage containing soybean powder or soymilk for a long period of time has been considered in any prior art documents.

### Citation List

### Patent Literature

PTL 1: Japanese Unexamined Patent Publication No. 1985-47637

### [Summary of Invention]

### [Problem to Be Solved by the Invention]

Conventionally, carbonated beverages are generally stored in containers suitably selected from PET bottles, bottles, cans and the like from a design viewpoint. However, it was found that a carbonated beverage containing soybean powder or soymilk has low stability against light exposure; therefore, when such a beverage is stored in a PET bottle or a bottle that is generally used for storing carbonated beverages, its preservation stability is unexpectedly impaired. The factors that cause instability against light exposure are generally removed by blocking light rays in the ultraviolet range; however, surprisingly, the preservation stability of a carbonated beverage containing soybean powder or soymilk cannot be maintained even when it is stored in a container that blocks rays in the ultraviolet range (e.g., a brown bottle). Therefore, the establishment of a technique that can maintain the preservation stability of a carbonated beverage containing soybean powder or soymilk is required for distributing and selling a carbonated beverage containing soybean powder or soymilk.

An object of the present invention is to provide a technique that allows the commercialization of a carbonated beverage containing soybean powder and/or soymilk stored in a bottle in a condition that provides long-term preservation stability.

### [Means for Solving the Problem]

The present inventors conducted extensive studies in an attempt to solve the above-described problem and found that by storing a carbonated beverage containing soybean powder and/or soymilk in a bottle having a light transmittance of 10% or less for a wavelength of 250 to 650 nm, deterioration of the taste of the bottled carbonated beverage containing soybean powder and/or soymilk can be reduced, and long-term preservation stability can thereby be maintained. Bottles having a light transmittance of 10% or less for a wavelength of 250 to 650 nm have not been employed in the field of conventional carbonated beverages. Therefore, the present invention has been accomplished based on a completely novel idea. The present invention has been completed by conducting further studies based on such findings.

Specifically, the present invention provides a carbonated beverage as described below.
Item 1. A bottled carbonated beverage containing soybean powder and/or soymilk, the carbonated beverage being stored in a bottle having a light transmittance of 10% or less for a wavelength of 250 to 650 nm.
Item 2. The bottled carbonated beverage according to Item 1, wherein the carbonated beverage has a pH of 5 or higher.
Item 3. The bottled carbonated beverage according to Item 1 or 2, wherein the carbonated beverage has a soybean-derived solids content of 1 to 30 wt%.
Item 4. The bottled carbonated beverage according to any one of Items 1 to 3, wherein the carbonated beverage further comprises a saccharide.
Item 5. The bottled carbonated beverage according to any one of Items 1 to 4, wherein the carbonated beverage comprises carbon dioxide in an amount of 0.5 to 3.5 gas volume.
Item 6. The bottled carbonated beverage according to any one of Items 1 to 5, wherein the carbonated beverage comprises soybean powder and has a viscosity at 20°C of 1,000 mPa·s or less.
Item 7. A method for stably preserving a bottled carbonated beverage containing soybean powder and/or soymilk, the method comprising storing the carbonated beverage in a bottle having a light transmittance of 10% or less for a wavelength of 250 to 650 nm.

### [Effect of the Invention]

The present invention allows a carbonated beverage containing soybean powder and/or soymilk to be preserved in a highly stable condition, and is very useful for the practical use of carbonated beverages containing soybean powder and/or soymilk on a commercial basis.

Furthermore, the present invention can provide satisfactory preservation stability even when the content of the soybean-derived ingredient in the carbonated beverage is increased. Therefore, the present invention can provide a carbonated beverage that contains a highly concentrated soybean-derived ingredient on a commercial basis, which was not possible with conventional techniques.

Additionally, when soybean powder is used as the soybean ingredient of the carbonated beverage to be bottled in the present invention, the nutritional value of the carbonated beverage of the present invention is very high because the carbonated beverage contains almost all of the nutrients contained in soybeans. There have never been any reports of a carbonated beverage containing soybean powder. The present invention provides a soybean powder-containing carbonated beverage, which can be put into practice on a commercial basis, for the first time in the world. The carbonated beverage is expected to provide a favorable response to the health consciousness of consumers, which has been increasing in recent years, and to the diversifying preferences of consumers.

### [Brief Description of the Drawing]

Fig. 1 shows measurement results of the light transmittance of each bottle used in the Examples.
Fig. 2 shows the preservation stability of each bottled carbonated beverage measured in the Examples.

### [Mode for Carrying Out the Invention]

### 1. Bottled carbonated beverage

One of the major characteristics of the bottled carbonated beverage of the present invention is that a carbonated beverage containing soybean powder and/or soymilk is stored in a bottle having a light transmittance of 10% or less for the wavelength range of 250 to 650 nm. The bottled carbonated beverage of the present invention is explained in detail below.

The carbonated beverage bottled in the present invention is a carbonated beverage that contains soybean powder and/or soymilk.

The soybean powder used in the present invention is obtained by heating and grinding soybeans. There is no particular limitation to the soybean powder insofar as it can be used in general soybean beverages.

The soybean powder used for the carbonated beverage of the present invention may, for example, be produced by the following method.

First, raw soybeans are carefully selected, as required, in order to remove halved beans, crushed beans, worm-eaten beans, other seeds, contaminants, etc. The raw soybeans may be subjected to a washing treatment such as water washing or the like in order to remove dust, dirt, etc., attached to the surface of the soybeans. Further, the raw soybeans that are used are dehulled using an appropriate dehulling apparatus, auxiliary dehulling apparatus, etc., according to a conventional method. Note that, in the dehulling treatment, it is preferable to separate the skin of the soybeans while minimizing mechanical damage, such as cracking, breaking, etc., to the cotyledon, because when the cells of the leaves are physically damaged, enzymes act on the soybean oil, giving the soybeans a strong raw smell.

Next, the raw soybeans are subjected to a heat treatment by steaming or boiling. The heat treatment by steaming is preferable in view of obtaining soybean powder that, while maintaining as the nutrients contained in the soybeans as much as possible, has good flavor, texture, and a reduced soybean smell. The heat treatment by steaming may usually be performed by contacting the raw soybeans with moisture at 65 to 105°C for 30 seconds to 30 minutes. The heat treatment by boiling may be performed by immersing the raw soybeans in boiling water.

The thus heat-treated, processed soybeans are then subjected to a grinding treatment, thereby obtaining soybean powder. To facilitate the grinding treatment, the heat-treated, processed soybeans are preferably subjected to a drying treatment prior to the grinding treatment. Specifically, a preferable method is, for example, one in which the heat-treated, processed soybeans are first pressed flat into flakes by a roll, and then subjected to the drying treatment. The drying treatment can be performed by employing a known method, such as drying under reduced pressure, air drying, drying by heating, etc. Drying under reduced pressure is preferable in view of maintaining a good texture and flavor while suppressing the loss of useful nutrients. The grinding treatment may be performed using various grinding apparatuses used for powdering in the relevant technical field. Specific examples of the grinding apparatuses include an air grinder.

The particle size of the soybean powder used for the carbonated beverage of the present invention is not particularly limited, and can be suitably set within a range that does not impair the flavor of the carbonated beverage.

Further, the soymilk contained in the carbonated beverage of the present invention may be a commonly used type. Methods of producing soymilk are known in the relevant technical field. Specifically, soymilk can be produced by mashing dehulled raw soybeans; adding water thereto to perform wet milling so as to form a suspension (emulsified beans, i.e., bean liquid); heating this suspension as needed; and removing the solids (bean curd refuse) by a solid-liquid separation treatment.

The carbonated beverage to be bottled in the present invention may contain, as the soybean-derived ingredient, either of the above-described soybean powder or soymilk, or a combination of both of them. Soymilk is produced by removing bean curd refuse. In contrast, soybean powder substantially contains all of the nutrients contained in soybeans. Further, when soybean powder is used, the resulting beverage is satisfactorily filling and has no strong raw smell, compared to soymilk. Therefore, soybean powder is preferable as the soybean-derived ingredient to be contained in the beverage.

In the carbonated beverage of the present invention, the content of the soybean powder and/or soymilk is not particularly limited. For example, the range of the soybean-derived solids content of soybean powder and/or soymilk is 1 to 30 wt%, preferably 3 to 21 wt%, more preferably 5 to 10 wt%, and still more preferably 7 to 10 wt%. As described above, even when the carbonated beverage of the present invention contains soybean-derived solids in a high content, it has a refreshing carbonic acid flavor and maintains a stable condition of the soybean-derived ingredient without causing coagulation. Specifically, the carbonated beverage of the present invention can be provided with a refreshing carbonic acid flavor as well as excellent stability, while maximizing the flavor and nutrients derived from the soybean-derived ingredient due to the high content of the soybean-derived ingredient in the carbonated beverage. Note that the term "soybean-derived solids content" used in the present specification refers to the amount of soybean-derived ingredient measured using a microwave drying moisture/solids analyzer.

There is no limitation to the pH of the carbonated beverage of the present invention; however, it is preferable to adjust the pH to 5.0 or higher to further improve the preservation stability. By satisfying the above-described pH range, the carbonated beverage can be prepared without causing coagulation of the soybean-derived ingredient even at a high content thereof. The pH is preferably in the range of 5.0 to 7.0, and more preferably 6.0 to 7.0 for maintaining the excellent preservation stability of the carbonated beverage of the present invention. The pH of the carbonated beverage of the present invention is adjusted by using a known pH-adjusting agent that is applicable to food products. Generally, because carbonic acid contained in carbonated beverages is an acidic substance, the carbonated beverage of the present invention can be adjusted to the above-described pH range by adding, for example, an alkaline agent, such as sodium hydroxide, disodium hydrogen phosphate, potassium hydroxide, tetrapotassium pyrophosphate, tripotassium pyrophosphate, calcium hydroxide, sodium bicarbonate, dipotassium hydrogenphosphate, tripotassium phosphate, arginine, etc.

The carbonated beverage of the present invention may also contain a saccharide. The effect of suppressing coagulation of the soybean-derived ingredient can be further improved by containing a saccharide while satisfying the above-described pH conditions. The saccharide that is contained in the carbonated beverage of the present invention is not particularly limited insofar as it is applicable to food products. Examples thereof include glucose, sucrose, fructose, lactose, liquid sugars (for example, high fructose corn syrup), glutinous starch syrup, caramel, indigestible dextrin, polydextrose, dextrin, sorbitol, isomaltulose, maltitol, stevia, *Siraitia grosvenorii,* etc. Among these, glucose, sucrose, fructose, liquid sugars (for example, high fructose corn syrup), glutinous starch syrup, caramel, indigestible dextrin, polydextrose, dextrin, sorbitol, isomaltulose, and maltitol are examples of saccharides that strongly enhance the effect of suppressing coagulation of the soybean-derived ingredient.

When saccharide is contained in the carbonated beverage of the present invention, the content thereof is not particularly limited. For example, the content is in the range of 0.1 to 30 wt%, and preferably 1 to 20 wt%.

The viscosity of the carbonated beverage of the present invention is not particularly limited and may be suitably adjusted within a viscosity range suitable for carbonated beverages. For example, the viscosity at 20°C is generally 1,000 mPa·s or less, preferably 1 to 800 mPa·s, and more preferably 1 to 500 mPa·s. When soybean powder is used as the soybean-derived ingredient, it is possible to stably suppress coagulation of the soybean-derived ingredient for a long period of time and provide better stability to the carbonated beverage by adjusting the pH and viscosity to within the above-described ranges. The adjustment of viscosity is known in the relevant technical field, and is performed, for example, by suitably adjusting the proportions of ingredients that affect viscosity (for example, soybean powder, soymilk, saccharide, thickener, etc.). Note that, in the present invention, the above-described viscosity values are measured by a B-type viscometer (rotor No. 19, at a rotational speed of 6.0 rpm and measurement temperature at 20°C).

The amount of carbon dioxide in the carbonated beverage of the present invention is suitably adjusted taking into account the carbonic acid flavor (the refreshing feeling and the like from carbonic acid) that is imparted to the carbonated beverage. For example, the amount of carbon dioxide is a 0.5 to 3.5 gas volume, preferably a 1 to 3.5 gas volume, and more preferably a 1.5 to 3.5 gas volume. Satisfying the above-described gas volume allows the consumer to enjoy the refreshing feeling and the like attributable to carbonic acid, ensuring a good flavor attributable to carbonic acid. Note that the term "gas volume" used herein is a unit indicating the amount of carbon dioxide in the beverage. More specifically, this value indicates the ratio of the volume of carbon dioxide dissolved in a beverage to the volume of the beverage under the standard condition (1 atm at 20°C).

As is the case with general beverages, suitable amounts of various additives may be contained in the carbonated beverage of the present invention. Examples thereof include acidulants, sweeteners, preservatives, colorants, flavoring agents, stabilizers, antioxidants, emulsifiers, reinforcing agents, thickeners, etc.

The carbonated beverage of the present invention is prepared by adding predetermined amounts of ingredients to water, and injecting carbon dioxide thereinto.

When soybean powder is used as the soybean-derived ingredient in the carbonated beverage of the present invention, it is preferable to subject a liquid, in which soybean powder and other ingredients are optionally added to water, to a homogenization treatment so as to enhance the dispersibility of the soybean powder in the beverage. The homogenization treatment as described above makes it possible to obtain a carbonated beverage having a better texture, in particular, smoothness. The homogenization treatment can be performed using a general homogenizer. Specifically, the treatment is performed using a high-pressure homogenizer (LAB40) manufactured by Gaulin, under the conditions of about 200 to 1,000 kgf/cm², preferably about 300 to 800 kgf/cm².

In the present invention, carbon dioxide can be injected by a known method, such as a pre-mix method, post-mix method, or the like. Additionally, in order to suppress deterioration of the beverage of the present invention, oxygen contained in the solution may be removed by subjecting the solution to a deaeration treatment prior to injecting the carbon dioxide.

In the present invention, the carbonated beverage is stored in bottles having a light transmittance of 10% or less for a wavelength of 250 to 650 nm. Thus, the present invention maintains the long-term preservation stability of the carbonated beverage by blocking light rays within a specific wavelength range.

The bottle used in the present invention is not particularly limited as long as it has a light transmittance of 10% or less for a wavelength of 250 to 650 nm. In order to further improve the preservation stability of the carbonated beverage, the light transmittance is preferably 7% or less, more preferably 5% or less, and still more preferably 3% or less.

Here, the expression "light transmittance for a wavelength of 250 to 650 nm" means the light transmittance satisfied over the entire wavelength range of 250 to 650 nm. More specifically, the light transmittance value defined by the present invention satisfies the entire wavelength region of 250 to 650 nm. The light transmittance is measured using a spectrophotometer.

A specific example of a bottle having the above-defined light transmittance is a colored bottle (e.g., a black bottle) having the above-defined light transmittance (hereunder, such a bottle may be referred to as non-coated bottle). It is also possible to use a transparent or colored bottle that does not meet the above-defined light transmittance coated with a coating film (e.g., shrink film) or the like having desired light shielding properties on the outer surface of the bottle (hereunder, such a bottle may be referred to as a coated bottle).

When a coated bottle is used in the present invention, the bottle may be coated with a single coating film or with two or more coating films in combination. The number of coating films used may be suitably selected depending on the light transmittance of the coating film and the light transmittance of the bottle to be coated. A preferable example of a coated bottle is a dark brown bottle that is coated with a single shrink film having two black-printed layers and one white-printed layer laminated therein.

When a coated bottle is used in the present invention, the coating film does not have to coat the entire surface of the bottle, and it does not necessarily have to coat the bottom of the bottle, which is barely exposed to light. More specifically, when a coated bottle is used in the present invention, it is necessary that the bottle is coated with a coating film having desired light shielding properties over the entire bottle other than the bottom thereof.

The bottled carbonated beverage of the present invention is produced by storing the carbonated beverage in a bottle having the light transmittance described above by employing a known method.

The bottled carbonated beverage thus produced exhibits less deterioration in taste with the passage of time and a reduced occurrence of aggregation, giving it excellent long-term preservation stability even at room temperature, and therefore making it very useful on a commercial basis.

### 2. Method for stably preserving bottled carbonated beverage containing soybean powder and/or soymilk

As described above, a carbonated beverage containing soybean powder and/or soymilk can be stably preserved by storing the carbonated beverage in a bottle having a light transmittance of 10% or less for a wavelength of 250 to 650 nm.

Accordingly, the present invention also provides a method for stably preserving a carbonated beverage containing soybean powder and/or soymilk characterized in that the carbonated beverage is stored in a bottle having a light transmittance of 10% or less for a wavelength of 250 to 650 nm.

The carbonated beverages and bottles used in the stable preservation method of the present invention are the same as those described in the section "1. Bottled Carbonated Beverage".

### [Examples]

The present invention is described below in detail with reference to Examples. However, the scope of the invention is not limited to these Examples.

### Example Production of carbonated beverage containing soybean powder, and evaluation of the stability thereof

### 1. Production of carbonated beverage containing soybean powder

Carbonated beverages containing soybean powder were produced according to the formulations shown in Table 1. The soybean powder contained therein was prepared by steaming halved soybeans, then drying and grinding the same. No coagulation or the like was observed immediately after production in any of the carbonated beverages containing soybean powder of Formulations 1 to 3 shown below.

**Table 1**

| | Formulation and physical properties | | |
|---|---|---|---|
| | Formulation 1 | Formulation 2 | Formulation 3 |
| Soybean powder | 7 wt% | 7 wt% | 7 wt% |
| Sucrose | 8 wt% | 8 wt% | 8 wt% |
| Stevia | q.s. | - | q.s. |
| Polydextrose | - | q.s. | q.s. |
| pH Adjuster | q.s. | q.s. | q.s. |
| Amount of carbon dioxide gas | 2.2 gas volume | 2.2 gas volume | 2.2 gas volume |
| Water | Remainder | Remainder | Remainder |
| pH | 6.4 | 6.4 | 6.4 |
| Brix | 15 | 15 | 15 |
| Viscosity (mPa·s)#¹ | 14 | 14 | 14 |

| | | | |
|---|---|---|---|
| #1: Viscosity was measured with a B-type viscometer ("TVB-10", manufactured by Toki Sangyo Co., Ltd.) at 20°C using rotor No. 19 at a rotational speed of 6.0 rpm. | | | |

### 2. Bottling

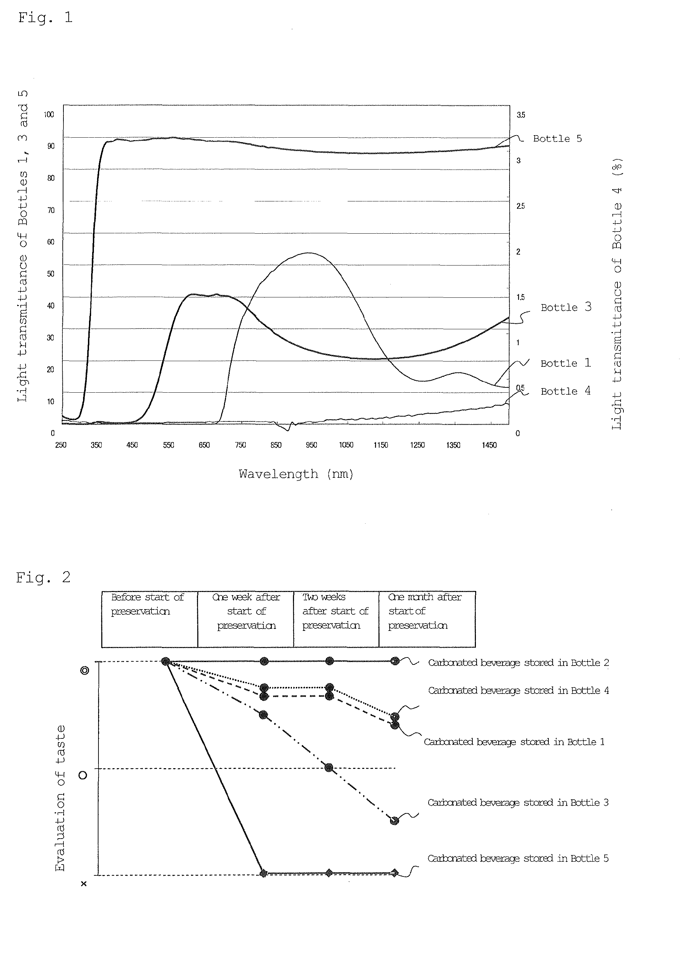

The carbonated beverages containing soybean powder prepared above were stored in bottles (volume: 100 mL) shown in Table 2 under an aseptic condition. The bottles were capped, producing bottled carbonated beverages. A shrink film was provided to Bottles 2 and 4 after being capped in such a manner that the shrink film covered the caps. The light transmittance of Bottles 1, and 3 to 5 was measured in advance using a spectrophotometer ("U-4100", manufactured by Hitachi, Ltd.). Fig. 1 shows the measurement results.

As is clear from the results shown in Fig. 1, Bottle 1, which is a black glass bottle, blocks light rays having a wavelength of 250 to 650 nm. Fig. 1 also indicates that Bottle 3, which is a dark brown glass bottle, has a light transmittance of about 40% for a wavelength of 550 to 650 nm. However, Bottle 4, i.e., Bottle 3 covered with a shrink film as described in Table 2 below, blocks light rays having a wavelength of 250 to 650 nm. From these results, there is no doubt that Bottle 2, formed by covering a black glass bottle with shrink film, also blocks light rays having a wavelength of 250 to 650 nm.

**Table 2**

| | Structure of bottle |
|---|---|
| Bottle 1 | Black glass bottle |
| Bottle 2 | The outer surface of Bottle 1 (other than the bottom portion) was coated with a single shrink film having two black-printed layers and one white-printed layer laminated therein (the white-printed layer being the outermost layer). |
| Bottle 3 | Dark brown glass bottle |
| Bottle 4 | The outer surface (other than the bottom portion) of Bottle 3 was covered with a single shrink film having two black-printed layers and one white-printed layer laminated therein (the white-printed layer being the outermost layer). |
| Bottle 5 | Transparent glass bottle |

### 3. Evaluation of preservation stability

The bottled carbonated beverages thus obtained were preserved for one month at 10°C under exposure to light of 14,000 lux. The taste was evaluated by three experienced panelists immediately after, one week after, two weeks after, and one month after the start of preservation. The taste was evaluated based on the criteria described below.

### Evaluation of taste

Three panelists were requested to evaluate the taste of each beverage to ⊚, ○, and × based on the criteria described below.
⊚: Having almost the same level of flavor as that immediately after production, with excellent balance between a soybean-derived flavor and a carbonic acid-derived refreshing mouthfeel.
○: Having a slightly different flavor from that immediately after production; however, maintaining good flavor with a good balance between soybean-derived flavor and a carbonic acid-derived refreshing mouthfeel.
×: Having a flavor that is deteriorated compared to that immediately after production.

The flavor was assessed based on a total evaluation of richness; heaviness; graininess; thickness; milkiness; smoothness; beany smell; strong raw smell; harsh taste; bitterness; rawness; sweetness; aroma; acidic taste; top notes; solvent smell; fruitiness; ripeness; body; grainy smell; astringency; oily or fatty smell; metallic taste; medicinal taste; sourness; fermentation smell; etc.

### 4. Results

Fig. 2 shows the evaluation results for the preservation stability of the carbonated beverage of Formulation 1 that was stored in Bottles 1 to 5. The results indicate that the carbonated beverage stored in the bottles, namely, Bottle 1, Bottle 2, and Bottle 5, which blocked light, rays having a wavelength of 250 to 650 nm, exhibited suppressed deterioration of flavor with the passage of time and maintained excellent flavor. In contrast, although Bottle 3 blocked light rays having a wavelength in the ultraviolet range, the carbonated beverage stored therein exhibited deterioration of flavor with the passage of time. Therefore, Bottle 3 is not desirable for use on a commercial basis.

The carbonated beverages of Formulations 2 and 3 were stored in Bottles 1 to 5 and their preservation stability was measured. The measurement results were almost the same as those of the carbonated beverage of Formulation 1 described above.

As is clear from the results, it is important to select a bottle having a reduced light transmittance against light rays having a wavelength of 250 to 650 nm in order to maintain the preservation stability of a bottled carbonated beverage containing soybean powder and/or soymilk.

## Claims

1. A bottled carbonated beverage containing soybean powder and/or soymilk, the carbonated beverage being stored in a bottle having a light transmittance of 10% or less for a wavelength of 250 to 650 nm.

2. The bottled carbonated beverage according to claim 1, wherein the carbonated beverage has a pH of 5 or higher.

3. The bottled carbonated beverage according to claim 1 or 2, wherein the carbonated beverage has a soybean-derived solids content of 1 to 30 wt%.

4. The bottled carbonated beverage according to any one of claims 1 to 3, wherein the carbonated beverage further comprises a saccharide.

5. The bottled carbonated beverage according to any one of claims 1 to 4, wherein the carbonated beverage comprises carbon dioxide in an amount of 0.5 to 3.5 gas volume.

6. The bottled carbonated beverage according to any one of claims 1 to 5, wherein the carbonated beverage comprises soybean powder and has a viscosity at 20°C of 1,000 mPa·s or less.

7. A method for stably preserving a bottled carbonated beverage containing soybean powder and/or soymilk, the method comprising storing the carbonated beverage in a bottle having a light transmittance of 10% or less for a wavelength of 250 to 650 nm.
